# EUROPEAN PATENT SPECIFICATION

(11) **EP 3 432 535 B1**
(45) Date of publication and mention of the grant of the patent: **01.09.2021**
(21) Application number: 17181875.0
(22) Date of filing: 18.07.2017
(51) Int. Cl.: H04L 29/06, H04W 12/08

(54) **APPLYING FILTER RULES IN LPWA COMMUNICATION NETWORKS**
ANWENDEN VON FILTERREGELN IN LPWA-KOMMUNIKATIONSNETZWERKE
APPLICATION DES RÈGLES DE FILTRAGE DANS UN RÉSEAU LPWA

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- WO-A1-2015/183380
- WO-A1-2017/078804
- US-A1- 2015 071 139
- US-B1- 8 458 800
- TSAO R ALEXANDER COOPER POWER SYSTEMS M DOHLER CTTC V DAZA A LOZANO UNIVERSITAT POMPEU FABRA T: "A Security Threat Analysis for Routing over Low-Power and Lossy Networks; draft-ietf-roll-security-threats-03.txt", A SECURITY THREAT ANALYSIS FOR ROUTING OVER LOW-POWER AND LOSSY NETWORKS; DRAFT-IETF-ROLL-SECURITY-THREATS-03.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 26 June 2013 (2013-06-26), pages 1-48, XP015094881, [retrieved on 2013-06-26]

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband loT communication networks.

### BACKGROUND

Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints as well in scenarios with deep indoor penetration, e.g. within an urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB IoT can be found in the 3GPP technical report TR 45.820.

Due to the generally limited hardware resources of a communication device based on LPWA technology and, in particular, NB IoT technology, security mechanisms known, for instance, from smart phones cannot be used for such a communication device. Thus, there is a need for improved devices, methods and systems for wireless communication networks based on LPWA technology, in particular narrowband IoT networks.

The following literature helps to better understand the background of the invention:

Tsao et al: "A Security Threat Analysis for Routing over Low-Power and Lossy Networks" provides a security threat analysis for routing over low-power and lossy networks (LLN), including defining and evaluating security threats, describing appropriate countermeasures as well as providing security recommendations for incorporation into LLN routing protocols.

US 8 458 800 B1 discloses a secure smart phone that is adapted, through software modifications only, to provide multiple operating domains or domains that provide differing levels of security and reliability. Each operating domain is isolated from the others. Detection of unauthorized modification is provided. Cross domain activity notification is provided.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB IoT technology. Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network, wherein the communication device comprises: a processor configured to process data; a memory configured to store data; a radio configured to transmit and/or receive data over the LPWA communication network; and a security system. The security system is configured to operate more than one logically separated sets of security domains, including a first set of security domains, on the processor and the memory, wherein each set of security domains comprises a processor security domain and a memory security domain, wherein the processor security domain of the first set of security domains is configured to monitor and/or control data to be transmitted by the radio and/or data received by the radio on the basis of a set of filter rules.

Thus, an improved communication device for wireless communication networks based on LPWA technology, in particular narrowband IOT networks, is provided.

The security system can be implemented in hardware and/or software. In an embodiment, the security system can be implemented using virtualization techniques. In a further possible embodiment of the communication device the processor, the memory and the radio are implemented as a system on a chip. In a further possible embodiment the communication device further comprises a communication bus, wherein the communication bus is configured to exchange data between the processor, the memory and the radio.

In a further possible implementation form of the communication device according to the first aspect, the set of filter rules is stored in the memory security domain of the first set of security domains. The set of filter rules can comprise one or more filter rules.

In a further possible implementation form of the communication device according to the first aspect, the data to be transmitted by the radio and/or the data being received by the radio comprises a plurality of data packets, wherein each data packet comprises a data packet header and a data packet payload and wherein the processor security domain of the first set of security domains is configured to monitor and/or control the data packet headers and/or the data packet payloads of the data packets to be transmitted or being received by the radio on the basis of the set of filter rules.

In a further possible implementation form of the communication device according to the first aspect, the processor security domain of the first set of security domains is configured to determine a target address identifier, in particular an IP target address, associated with data to be transmitted by the radio and/or a source address identifier, in particular an IP source address, associated with data received by the radio.

In a further possible implementation form of the communication device according to the first aspect, the set of filter rules comprises a blacklist of target address identifiers, in particular IP target addresses, wherein the processor security domain of the first set of security domains is configured to prohibit the transmission of data by the radio, in case the target address identifier, in particular the IP target address, associated with the data to be transmitted by the radio is part of the blacklist.

In a further possible implementation form of the communication device according to the first aspect, the set of filter rules comprises a whitelist of target address identifiers, in particular IP target addresses, wherein the processor security domain of the first set of security domains is configured to prohibit the transmission of data by the radio, in case the target address identifier, in particular the IP target address, associated with the data to be transmitted by the radio is not part of the whitelist.

In an implementation form, the processor security domain of the first set of security domains can be configured to transmit a notification message via the radio to a remote network management entity, in case a target address identifier associated with the data to be transmitted by the radio is part of the blacklist and/or not part of the whitelist.

In a further possible implementation form of the communication device according to the first aspect, the target address identifier comprises a port number.

In a further possible implementation form of the communication device according to the first aspect, the set of filter rules comprises a blacklist of source address identifiers, in particular IP source addresses, wherein the processor security domain of the first set of security domains is configured to prohibit the further processing of data received by the radio, in case the source address identifier, in particular the IP source address, associated with the data received by the radio is part of the blacklist.

In a further possible implementation form of the communication device according to the first aspect, the set of filter rules comprises a whitelist of source address identifiers, in particular IP source addresses, wherein the processor security domain of the first set of security domains is configured to prohibit the further processing of data received by the radio, in case the source address identifier, in particular the IP source address, associated with the data received by the radio is not part of the whitelist.

In an implementation form, the processor security domain of the first set of security domains can be configured to transmit a notification message via the radio to a remote network management entity, in case a source address identifier associated with the data received by the radio is part of the blacklist and/or not part of the whitelist.

In a further possible implementation form of the communication device according to the first aspect, the source address identifier comprises a port number.

In a further possible implementation form of the communication device according to the first aspect, the processor security domain of the first set of security domains is configured to determine a communication protocol used for data to be transmitted by the radio and/or data received by the radio and wherein the set of filter rules comprises a blacklist and/or a whitelist of communication protocols.

In a further possible implementation form of the communication device according to the first aspect, the processor security domain of the first set of security domains is configured to adjust the set of filter rules in response to an adjustment request from the remote network management entity of the LPWA communication network.

In a further possible implementation form of the communication device according to the first aspect, the processor security domain of the first set of security domains is configured to verify a digital signature associated with the adjustment request and to adjust the set of filter rules according to the adjustment request, in case the digital signature has been verified. In an embodiment, the processor security domain of the first set of security domains is configured to verify the digital signature associated with the adjustment request on the basis of a public key stored in the memory security domain of the first set of security domains.

In a further possible implementation form of the communication device according to the first aspect, the processor is configured to implement a real-time execution environment based on a real-time operating system, wherein the security system is configured to operate the respective processor security domains of the more than one sets of security domains in parallel to the real-time execution environment.

In a further possible implementation of the communication device according to the first aspect, the memory comprises in addition to the respective memory security domains of the more than one sets of security domains a real-time memory portion that is configured to be accessible from the real-time execution environment and the respective processor security domains of the more than one sets of security domains.

In a further possible implementation of the communication device according to the first aspect, the memory comprises a RAM, a ROM and/or a Flash memory.

In a further possible embodiment the communication device further comprises a sensor configured to collect data, wherein the security system is further configured to restrict access to the sensor to one or more selected sets of the more than one sets of security domains.

In a further possible embodiment the communication device further comprises an actuator, wherein the security system is further configured to restrict access to the actuator to one or more selected sets of the more than one sets of security domains.

In a further possible embodiment the communication device the communication device is configured to communicate over a narrowband loT communication network.

According to a second aspect the invention relates to a corresponding method of operating a communication device for communicating data over a low power wide area, LPWA, communication network, the communication device comprising a processor configured to process data, a memory configured to store data, and a radio configured to transmit and/or receive data over the LPWA communication network. The method comprises operating more than one logically separated sets of security domains, including a first set of security domains, on the processor and the memory, wherein each set of security domains comprises a processor security domain and a memory security domain, wherein the processor security domain of the first set of security domains is configured to monitor and/or control data to be transmitted by the radio and/or data received by the radio on the basis of a set of filter rules.

Thus, an improved communication method for wireless communication networks based on LPWA technology, in particular narrowband IOT networks, is provided.

The method according to the second aspect of the invention can be performed by the communication device according to the first aspect of the invention and its different embodiments. Thus, further features of the method according to the second aspect of the invention result directly from the functionality of the communication device according to the first aspect of the invention and its different embodiments and implementation forms. According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB loT communication network comprising a communication device according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

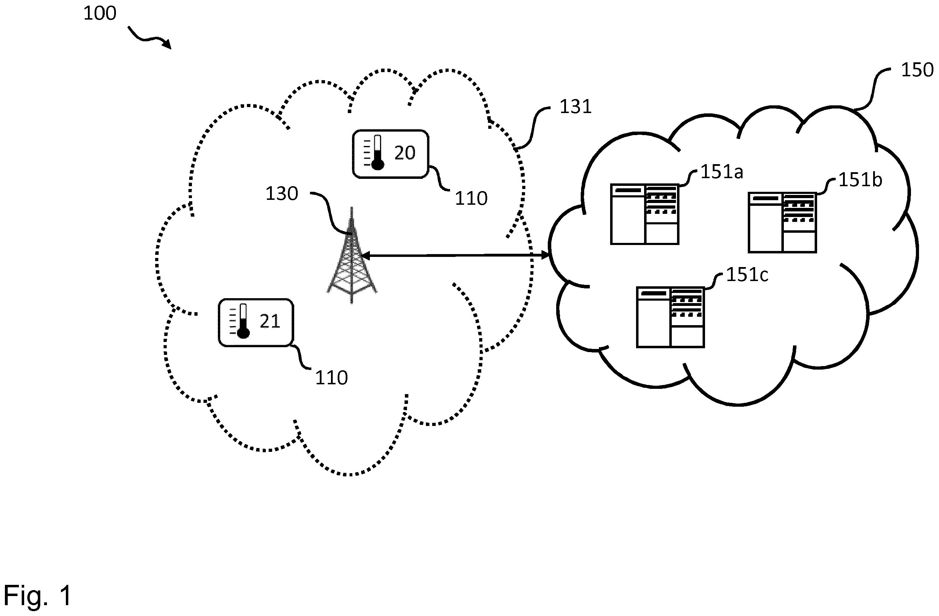

Figure 1 shows a schematic diagram of a cellular communication network 100. The cellular communication network 100 is a low-power wide-area (LPWA) communication network 100, in particular a LPWA communication network 100 based on narrowband (NB) loT technology, as described, for instance, in the 3GPP technical report TR 45.820.

The cellular communication network 100 comprises a radio access network 131, a core network 150 and a plurality of NB loT communication devices 110. In the exemplary embodiment shown in figure 1, the plurality of NB loT communication devices are smart temperature sensors configured to monitor temperature data and to provide the temperature data via the core network 150 of the NB loT communication network 100 to one or more network entities 151b, 151c, in particular network servers, configured to collect and analyze the temperature data from the plurality of NB loT communication devices 110.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB loT communication network 100. In the exemplary embodiment, shown in figure 1 the core network 150 comprises an authentication entity 151a configured to perform an authentication procedure with each of the NB loT communication devices 110 before granting full access to the NB loT communication network 100.

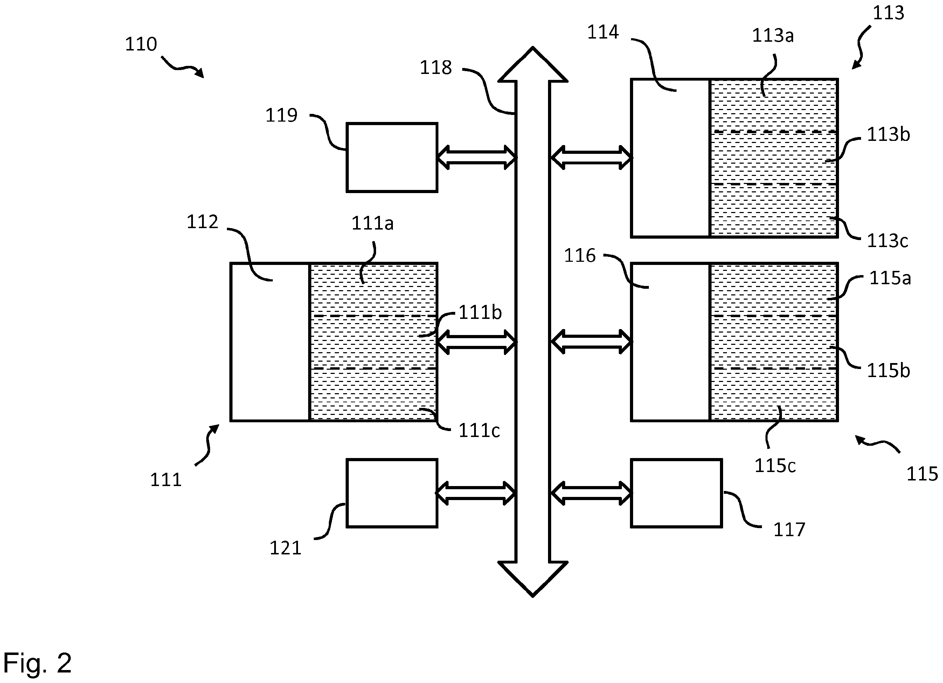

Under further reference to figure 2 in the following an embodiment of the NB loT communication device 110 will be described. The communication device 110 comprises a processor 111 configured to process data and running applications, a memory comprising a RAM 113 and a Flash memory 115 configured to store volatile and non-volatile data (in particular executable application code), respectively, and a radio 117 configured to transmit and/or receive data over the NB loT communication network 100. In an embodiment, the radio 117 can be configured to use one or more subcarriers of a channel bandwidth of about 200 Kilohertz (KHz) to communicate with the base station on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the RAM 113, the Flash memory 115 and the radio 117.

The communication device 110 further comprises a security system configured to operate one or more logically separated sets of security domains 111a-c, 113a-c, 115a-c, including a first set of security domains 111a, 113a, 115a, on the processor 111 and the memory, i.e. the volatile RAM 113 and the non-volatile Flash memory 115, wherein each set of security domains comprises a processor security domain 111a-c and a memory security domain 113a-c, 115a-c. In the exemplary embodiment shown in figure 2 the security system comprises three logically separated sets of security domains 111a-c, 113a-c, 115a-c, namely the first set of security domains 111a, 113a, 115a, comprising a processor security domain 111a, a RAM security domain 113a and a Flash memory security domain 115a, and a second and a third set of security domains 111b,c, 113b,c, 115b,c, comprising a respective processor security domain 111b,c, a respective RAM security domain 113b,c and a respective Flash memory security domain 115b,c. As already mentioned, the respective security domains of a set of security domains, for instance, the processor security domain 111a, the RAM security domain 113a and the Flash memory security domain 115a of the first set of security domains are logically separated from the security domains of the other sets of security domains.

The processor security domain 111a of the first set of security domains 111a, 113a, 115a is configured to monitor and/or control data to be transmitted by the radio 117 and/or data received by the radio 117 on the basis of a set of filter rules. In an embodiment, the set of filter rules is stored in the Flash memory security domain 115a of the first set of security domains 111a, 113a, 115a. In an embodiment, the set of filter rules can define a maximum number of transmissions within a predefined time interval, such as one transmission per day. Any additional transmission attempts can be prohibited.

In an embodiment, the data to be transmitted by the radio 117 and/or the data received by the radio 117 comprises a plurality of data packets, wherein each data packet comprises a data packet header and a data packet payload and wherein the processor security domain 111a of the first set of security domains 111a, 113a, 115a is configured to monitor and/or control the data packet headers and/or the data packet payloads of the data packets to be transmitted or being received by the radio 117 on the basis of the set of filter rules. In an embodiment, the set of filter rules can define a maximum length of allowable data packets. In an embodiment, the set of filter rules can comprise a plausibility validation of the data packet payloads. In case the data packet payloads do not pass the plausibility validation, the corresponding data packets can, for instance, be discarded.

In an embodiment, the processor security domain 111a of the first set of security domains 111a, 113a, 115a is configured to determine a target address identifier, in particular an IP target address, associated with data to be transmitted by the radio 117 and/or a source address identifier, in particular an IP source address, associated with data received by the radio 117.

In an embodiment, the set of filter rules comprises a blacklist of target address identifiers, in particular IP target addresses, wherein the processor security domain 111a of the first set of security domains 111a, 113a, 115a is configured to prohibit the transmission of data by the radio 117, in case the target address identifier, in particular the IP target address, associated with the data to be transmitted by the radio 117 is part of the blacklist.

Likewise, the set of filter rules can comprise a corresponding whitelist. Thus, in an embodiment, the set of filter rules comprises a whitelist of target address identifiers, in particular IP target addresses, wherein the processor security domain 111a of the first set of security domains 111a, 113a, 115a is configured to prohibit the transmission of data by the radio 117, in case the target address identifier, in particular the IP target address, associated with the data to be transmitted by the radio 117 is not part of the whitelist.

In an embodiment, the processor security domain 111a of the first set of security domains 111a, 113a, 115a is further configured to transmit a notification message via the radio 117 to the remote network entity 151a, in case the target address identifier associated with the data to be transmitted by the radio is part of the blacklist and/or not part of the whitelist. In an embodiment, the target address identifier can further comprise a port number.

In an embodiment, the set of filter rules comprises a blacklist of source address identifiers, in particular IP source addresses, wherein the processor security domain 111a of the first set of security domains 111a, 113a, 115a is configured to prohibit the further processing of data received by the radio 117, in case the source address identifier, in particular the IP source address, associated with the data received by the radio 117 is part of the blacklist.

Likewise, the set of filter rules can comprise a whitelist of source address identifiers, in particular IP source addresses, wherein the processor security domain 111a of the first set of security domains 111a, 113a, 115a is configured to prohibit the further processing of data received by the radio 117, in case the source address identifier, in particular the IP source address, associated with the data received by the radio 117 is not part of the whitelist.

Also for this case, the processor security domain 111a of the first set of security domains 111a, 113a, 115a can be configured to transmit a notification message via the radio 117 to the remote network entity 151a, in case the source address identifier associated with the data received by the radio is part of the blacklist and/or not part of the whitelist. In an embodiment, the source address identifier can further comprise a port number.

In an embodiment, the processor security domain 111a of the first set of security domains 111a, 113a, 115a is configured to determine a communication protocol used for data to be transmitted by the radio 117 and/or data received by the radio 117, wherein the set of filter rules comprises a blacklist and/or a whitelist of communication protocols. Thus, similarly to the embodiments described above based on a blacklist and/or whitelist of target/source address identifiers the processor security domain 111a of the first set of security domains 111a, 113a, 115a is configured can, for instance prohibit the further processing of data that has been received by the radio 117 using a communication protocol, which is part of the blacklist and/or not part of the whitelist of communication protocols defined by the set of filter rules.

In an embodiment, the processor security domain 111a of the first set of security domains 111a, 113a, 115a is configured to adjust the set of filter rules (or download a new set of filter rules) in response to an adjustment request from the remote network management entity 151a of the LPWA communication network 100. To this end, the processor security domain 111a of the first set of security domains 111a, 113a, 115a can be configured to verify a digital signature associated with the adjustment request provided by the remote network management entity 151a and to adjust the set of filter rules according to the adjustment request, in case the digital signature has been verified. In an embodiment, the processor security domain 111a of the first set of security domains 111a, 113a, 115a is configured to verify the digital signature associated with the adjustment request on the basis of a public key stored in the memory security domain 113a, 115a of the first set of security domains 111a, 113a, 115a.

As illustrated in figure 2 and as already mentioned above, the communication device 110 can further comprise a sensor 119 configured to collect sensor data. The security system can be configured to restrict access to the sensor to one or more selected sets of the one or more sets of security domains 111a-c, 113a-c, 115a-c.

Moreover, as also shown in figure 2, the communication device 110 can further comprise an actuator 121 for triggering an operation. The security system can be configured to restrict access to the actuator 121 to one or more selected sets of the one or more sets of security domains 111a-c, 113a-c, 115a-c.

In an embodiment, the first set of security domains 111a, 113a, 115a is further configured to authenticate the communication device 110 within the NB loT communication network 100. To this end, a cryptographic authentication key can be stored in the Flash memory security domain 115a of the first set of security domains 111a, 113a, 115 and the processor security domain 111a can be configured to run an authentication application for authenticating the communication device 110 using the cryptographic authentication key. In a further embodiment, another set of security domains can be configured to authenticate the communication device 110 within the NB loT communication network 100.

The security system of the communication device 110 shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing in the real-time execution environment 112. This can be achieved by using a single processor-core having two execution modes, one secure mode and another mode for standard processes. In this case the RAM and registers assigned to the single core are duplicated and one set is assigned to the normal mode, i.e. the real-time execution environment 112, and the other set to the secure execution mode, i.e. the secure execution environment. According to another embodiment, the security system of the communication device 110a and its security domains can be implemented using a multi-processor-core architecture with at least one secure-core with an own RAM, which is dedicated to executing only security-critical processes.

In an embodiment, both the RAM 113 and the Flash memory 115 can comprise in addition to the respective RAM security domains 113a-c and the Flash memory security domains 115a-c a real-time RAM portion 114 and a real-time Flash memory portion 116, which can be accessed from the real-time execution environment 112 of the processor 111 and the respective processor security domains 111a-c of the three sets of security domains.

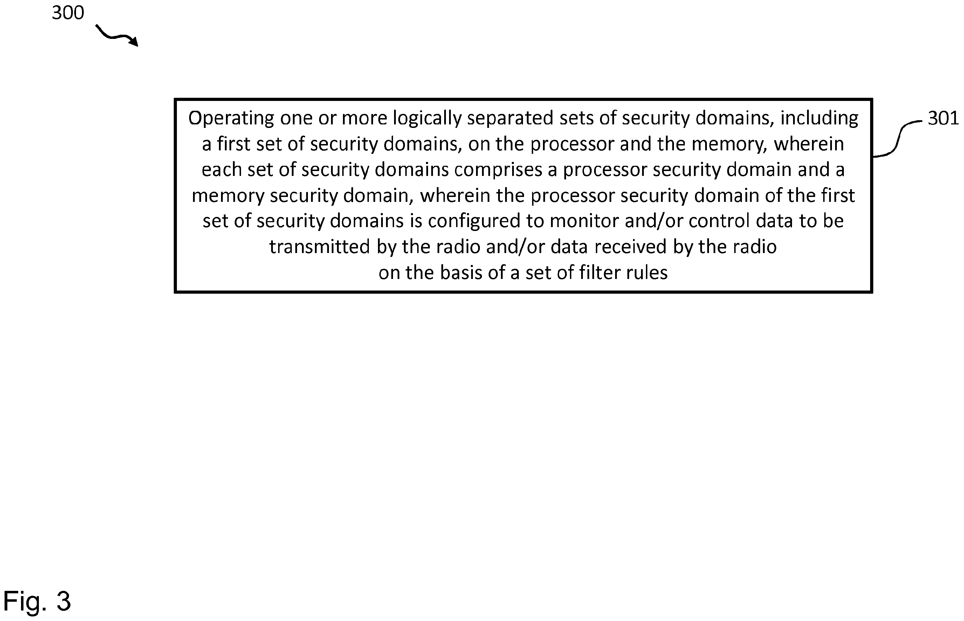

Figure 3 shows a corresponding method 300 of operating the communication device 110 for communicating data over the LPWA communication network 100. The method 300 comprises the step 301 of operating the one or more logically separated sets of security domains 111a-c, 113a-c, 115a-c, including the first set of security domains 111a, 113a, 115a, on the processor 111 and the memory 113, 115, wherein each set of security domains comprises a processor security domain 111a-c and a memory security domain 113a-c, 115a-c, wherein the processor security domain 111a of the first set of security domains 111a, 113a, 115a is configured to monitor and/or control data to be transmitted by the radio 117 and/or data received by the radio 117 on the basis of a set of filter rules.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein.

## Claims

1. A communication device (110) for communicating data over a low power wide area, LPWA, communication network (100), wherein the communication device (110) comprises:
a processor (111) configured to process data;
a memory (113, 115) configured to store data;
a radio (117) configured to transmit and receive data over the LPWA communication network (100); and a security system,
said communication device (110) being **characterized by** the
security system configured to operate more than one logically separated sets of security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), wherein the processor security domain (111a) of the first set of security domains (111 a, 113a, 115a) is configured to monitor and control data to be transmitted by the radio (117) and data received by the radio (117) on the basis of a set of filter rules.

2. The communication device (100) of claim 1, wherein the set of filter rules is stored in the memory security domain (113a, 115a) of the first set of security domains (111 a, 113a, 115a).

3. The communication device (100) of claim 1 or 2, wherein the data to be transmitted by the radio (117) and the data being received by the radio (117) comprises a plurality of data packets, wherein each data packet comprises a data packet header and a data packet payload and wherein the processor security domain (111a) of the first set of security domains (111a, 113a, 115a) is configured to monitor and control the data packet headers and the data packet payloads of the data packets to be transmitted or being received by the radio (117) on the basis of the set of filter rules.

4. The communication device (100) of any one of the preceding claims, wherein the processor security domain (111a) of the first set of security domains (111a, 113a, 115a) is configured to determine a target address identifier, in particular an IP target address, associated with data to be transmitted by the radio (117) and a source address identifier, in particular an IP source address, associated with data received by the radio (117).

5. The communication device (100) of claim 4, wherein the set of filter rules comprises a blacklist of target address identifiers, in particular IP target addresses, and wherein the processor security domain (111a) of the first set of security domains (111a, 113a, 115a) is configured to prohibit the transmission of data by the radio (117), in case the target address identifier, in particular the IP target address, associated with the data to be transmitted by the radio (117) is part of the blacklist of target address identifiers.

6. The communication device (100) of claim 4 or 5, wherein the set of filter rules comprises a whitelist of target address identifiers, in particular IP target addresses, and wherein the processor security domain (111a) of the first set of security domains (111a, 113a, 115a) is configured to prohibit the transmission of data by the radio (117), in case the target address identifier, in particular the IP target address, associated with the data to be transmitted by the radio (117) is not part of the whitelist of target address identifiers.

7. The communication device (100) of any one of claims 4 to 6, wherein the target address identifier comprises a port number.

8. The communication device (100) of any one of claims 4 to 7, wherein the set of filter rules comprises a blacklist of source address identifiers, in particular IP source addresses, and wherein the processor security domain (111a) of the first set of security domains (111a, 113a, 115a) is configured to prohibit the further processing of data received by the radio (117), in case the source address identifier, in particular the IP source address, associated with the data received by the radio (117) is part of the blacklist of source address identifiers.

9. The communication device (100) of any one of claims 4 to 8, wherein the set of filter rules comprises a whitelist of source address identifiers, in particular IP source addresses, and wherein the processor security domain (111a) of the first set of security domains (111a, 113a, 115a) is configured to prohibit the further processing of data received by the radio (117), in case the source address identifier, in particular the IP source address, associated with the data received by the radio (117) is not part of the whitelist of source address identifiers.

10. The communication device (100) of any one of claims 4 to 9, wherein the source address identifier comprises a port number.

11. The communication device (100) of any one of the preceding claims, wherein the processor security domain (111a) of the first set of security domains (111a, 113a, 115a) is configured to determine a communication protocol used for data to be transmitted by the radio (117) and/or data received by the radio (117) and wherein the set of filter rules comprises a blacklist and/or a whitelist of communication protocols.

12. The communication device (110) of any one of the preceding claims, wherein the processor security domain (111a) of the first set of security domains (111a, 113a, 115a) is configured to adjust the set of filter rules in response to an adjustment request from a remote network entity (151) of the LPWA communication network (100).

13. The communication device (110) of claim 12, wherein the processor security domain (111a) of the first set of security domains (111 a, 113a, 115a) is configured to verify a digital signature associated with the adjustment request and to adjust the set of filter rules according to the adjustment request, in case the digital signature has been verified.

14. A method of operating a communication device (110) for communicating data over a low power wide area, LPWA, communication network (100), the communication device (110) comprising a processor (111) configured to process data, a memory (113, 115) configured to store data, and a radio (117) configured to transmit and receive data over the LPWA communication network (100), wherein the method (300) is **characterized by**:
operating more than one logically separated sets of security domains (111a-c, 113a-c, 115a-c), including a first set of security domains (111a, 113a, 115a), on the processor (111) and the memory (113, 115), wherein each set of security domains comprises a processor security domain (111a-c) and a memory security domain (113a-c, 115a-c), wherein the processor security domain (111a) of the first set of security domains (111a, 113a, 115a) is configured to monitor and control data to be transmitted by the radio (117) and data received by the radio (117) on the basis of a set of filter rules.

15. A computer program product comprising program code for performing the method (300) of claim 14, when executed on a computer or a processor.

## Patentansprüche

1. Kommunikationsvorrichtung (110) zum Kommunizieren von Daten über ein Niedrigenergieweitbereichs-, LPWA-, Kommunikationsnetzwerk (100), wobei die Kommunikationsvorrichtung (110) aufweist:
einen Prozessor (111), der dazu eingerichtet ist, Daten zu verarbeiten;
einen Speicher (113, 115), der dazu eingerichtet ist, Daten zu speichern;
eine Funkvorrichtung (117), die dazu eingerichtet ist, Daten über das LPWA-Kommunikationsnetzwerk (100) zu senden und zu empfangen; und
ein Sicherheitssystem,
wobei die Kommunikationsvorrichtung (110) **dadurch gekennzeichnet ist, dass** das Sicherheitssystem dazu eingerichtet ist, mehr als einen logisch getrennten Satz von Sicherheitsdomänen (111a-c, 113a-c, 115a-c), darunter ein erster Satz von Sicherheitsdomänen (111a, 113a, 115a), auf dem Prozessor (111) und dem Speicher (113, 115) zu betreiben, wobei jeder Satz von Sicherheitsdomänen eine Prozessorsicherheitsdomäne (llla-c) und eine Speichersicherheitsdomäne (113a-c, 115a-c) aufweist, wobei die Prozessorsicherheitsdomäne (111a) des ersten Satzes von Sicherheitsdomänen (111a, 113a, 115a) dazu eingerichtet ist, Daten, die durch die Funkvorrichtung (117) gesendet werden sollen, und Daten, die durch die Funkvorrichtung (117) empfangen werden, auf der Basis eines Satzes von Filterregeln zu überwachen und zu steuern.

2. Kommunikationsvorrichtung (100) nach Anspruch 1, wobei der Satz von Filterregeln in der Speichersicherheitsdomäne (113a, 115a) des ersten Satzes von Sicherheitsdomänen (111a, 113a, 115a) gespeichert ist.

3. Kommunikationsvorrichtung (100) nach Anspruch 1 oder 2, wobei die Daten, die durch die Funkvorrichtung (117) gesendet werden sollen, und die Daten, die durch die Funkvorrichtung (117) empfangen werden, mehrere Datenpakete umfassen, wobei jedes Datenpaket einen Datenpaket-Header und eine Datenpaket-Nutzlast umfasst, und wobei die Prozessorsicherheitsdomäne (111a) des ersten Satzes von Sicherheitsdomänen (111a, 113a, 115a) dazu eingerichtet ist, die Datenpaket-Header und die Datenpaket-Nutzlasten der Datenpakete, die durch die Funkvorrichtung (117) gesendet werden sollen oder empfangen werden, auf der Basis des Satzes von Filterregeln zu überwachen und zu steuern.

4. Kommunikationsvorrichtung (100) nach einem der vorhergehenden Ansprüche, wobei die Prozessorsicherheitsdomäne (111a) des ersten Satzes von Sicherheitsdomänen (111a, 113a, 115a) dazu eingerichtet ist, eine Zieladressenkennung, insbesondere eine IP-Zieladresse, die mit Daten assoziiert ist, die durch die Funkvorrichtung (117) gesendet werden sollen, und eine Quelladressenkennung, insbesondere eine IP-Quelladresse, die mit Daten assoziiert ist, die durch die Funkvorrichtung (117) empfangen werden, zu bestimmen.

5. Kommunikationsvorrichtung (100) nach Anspruch 4, wobei der Satz von Filterregeln eine schwarze Liste mit Zieladressenkennungen, insbesondere IP-Zieladressen, umfasst und wobei die Prozessorsicherheitsdomäne (111a) des ersten Satzes von Sicherheitsdomänen (111a, 113a, 115a) dazu eingerichtet ist, die Übertragung von Daten durch die Funkvorrichtung (117) zu unterbinden, falls die Zieladressenkennung, insbesondere die IP-Zieladresse, die mit den Daten assoziiert ist, die durch die Funkvorrichtung (117) gesendet werden sollen, Teil der schwarzen Liste mit Zieladressenkennungen ist.

6. Kommunikationsvorrichtung (100) nach Anspruch 4 oder 5, wobei der Satz von Filterregeln eine weiße Liste mit Zieladressenkennungen, insbesondere IP-Zieladressen, umfasst und wobei die Prozessorsicherheitsdomäne (111a) des ersten Satzes von Sicherheitsdomänen (111a, 113a, 115a) dazu eingerichtet ist, die Übertragung von Daten durch die Funkvorrichtung (117) zu unterbinden, falls die Zieladressenkennung, insbesondere die IP-Zieladresse, die mit den Daten assoziiert ist, die durch die Funkvorrichtung (117) gesendet werden sollen, nicht Teil der weißen Liste mit Zieladressenkennungen ist.

7. Kommunikationsvorrichtung (100) nach einem der Ansprüche 4 bis 6, wobei die Zieladressenkennung eine Portnummer umfasst.

8. Kommunikationsvorrichtung (100) nach einem der Ansprüche 4 bis 7, wobei der Satz von Filterregeln eine schwarze Liste mit Quelladressenkennungen, insbesondere IP-Quelladressen, umfasst und wobei die Prozessorsicherheitsdomäne (111a) des ersten Satzes von Sicherheitsdomänen (111a, 113a, 115a) dazu eingerichtet ist, die weitere Verarbeitung von Daten, die durch die Funkvorrichtung (117) empfangen werden, zu unterbinden, falls die Quelladressenkennung, insbesondere die IP-Quelladresse, die mit den Daten assoziiert ist, die durch die Funkvorrichtung (117) empfangen werden, Teil der schwarzen Liste mit Quelladressenkennungen ist.

9. Kommunikationsvorrichtung (100) nach einem der Ansprüche 4 bis 8, wobei der Satz von Filterregeln eine weiße Liste mit Quelladressenkennungen, insbesondere IP-Quelladressen, umfasst und wobei die Prozessorsicherheitsdomäne (111a) des ersten Satzes von Sicherheitsdomänen (111a, 113a, 115a) dazu eingerichtet ist, die weitere Verarbeitung von Daten, die durch die Funkvorrichtung (117) empfangen werden, zu unterbinden, falls die Quelladressenkennung, insbesondere die IP-Quelladresse, die mit den Daten assoziiert ist, die durch die Funkvorrichtung (117) empfangen werden, nicht Teil der weißen Liste mit Quelladressenkennungen ist.

10. Kommunikationsvorrichtung (100) nach einem der Ansprüche 4 bis 9, wobei die Quelladressenkennung eine Portnummer umfasst.

11. Kommunikationsvorrichtung (100) nach einem der vorhergehenden Ansprüche, wobei die Prozessorsicherheitsdomäne (111a) des ersten Satzes von Sicherheitsdomänen (111a, 113a, 115a) dazu eingerichtet ist, ein Kommunikationsprotokoll, das für Daten, die durch die Funkvorrichtung (117) gesendet werden sollen, und/oder Daten, die durch die Funkvorrichtung (117) empfangen werden, verwendet wird, zu bestimmen, und wobei der Satz von Filterregeln eine schwarze Liste und/oder eine weiße Liste mit Kommunikationsprotokollen umfasst.

12. Kommunikationsvorrichtung (110) nach einem der vorhergehenden Ansprüche, wobei die Prozessorsicherheitsdomäne (111a) des ersten Satzes von Sicherheitsdomänen (111a, 113a, 115a) dazu eingerichtet ist, als Reaktion auf eine Anpassungsanforderung von einer entfernten Netzwerkentität (151) des LPWA-Kommunikationsnetzwerks (100) den Satz von Filterregeln anzupassen.

13. Kommunikationsvorrichtung (110) nach Anspruch 12, wobei die Prozessorsicherheitsdomäne (111a) des ersten Satzes von Sicherheitsdomänen (111a, 113a, 115a) dazu eingerichtet ist, eine digitale Signatur, die mit der Anpassungsanforderung assoziiert ist, zu verifizieren und, falls die digitale Signatur verifiziert wurde, den Satz von Filterregeln gemäß der Anpassungsanforderung anzupassen.

14. Verfahren zum Betreiben einer Kommunikationsvorrichtung (110) zum Kommunizieren von Daten über ein Niedrigenergieweitbereichs-, LPWA-, Kommunikationsnetzwerk (100), wobei die Kommunikationsvorrichtung (110) aufweist: einen Prozessor (111), der dazu eingerichtet ist, Daten zu verarbeiten, einen Speicher (113, 115), der dazu eingerichtet ist, Daten zu speichern, und eine Funkvorrichtung (117), die dazu eingerichtet ist, Daten über das LPWA-Kommunikationsnetzwerk (100) zu senden und zu empfangen, wobei das Verfahren (300) **gekennzeichnet ist durch**:
Betreiben von mehr als einem logisch getrennten Satz von Sicherheitsdomänen (111a-c, 113a-c, 115a-c), darunter ein erster Satz von Sicherheitsdomänen (111a, 113a, 115a), auf dem Prozessor (111) und dem Speicher (113, 115), wobei jeder Satz von Sicherheitsdomänen eine Prozessorsicherheitsdomäne (llla-c) und eine Speichersicherheitsdomäne (113a-c, 115a-c) aufweist, wobei die Prozessorsicherheitsdomäne (111a) des ersten Satzes von Sicherheitsdomänen (111a, 113a, 115a) dazu eingerichtet ist, Daten, die **durch** die Funkvorrichtung (117) gesendet werden sollen, und Daten, die **durch** die Funkvorrichtung (117) empfangen werden, auf der Basis eines Satzes von Filterregeln zu überwachen und zu steuern.

15. Computerprogrammprodukt, das Programmcode zum Durchführen des Verfahrens (300) nach Anspruch 14 bei Ausführung auf einem Computer oder einem Prozessor umfasst.

## Revendications

1. Dispositif de communication (110) pour communiquer des données sur un réseau de communication (100) LPWA à zone étendue de faible puissance, dans lequel le dispositif de communication (110) comprend :
un processeur (111) configuré pour traiter des données ;
une mémoire (113, 115) configurée pour mémoriser des données
une radio (117) configurée pour transmettre et recevoir des données sur le réseau de communication LPWA (100); et
un système de sécurité,
ledit dispositif de communication (110) étant **caractérisé par** le système de sécurité électronique configuré pour faire fonctionner plus d'un ensemble de domaines de sécurité logiquement séparés (111a-c, 113a-c, 115a-c), comprenant un premier ensemble de domaines de sécurité (111a, 113a, 115a), sur le processeur (111) et la mémoire (113, 115), dans lequel chaque ensemble de domaines de sécurité comprend un domaine de sécurité de processeur (llla-c) et un domaine de sécurité de mémoire (113a-c, 115a-c), dans lequel le domaine de sécurité de processeur (111a) du premier ensemble de domaines de sécurité (111a, 113a, 115a) est configuré pour surveiller et contrôler les données à transmettre par la radio (117) et les données reçues par la radio (117) sur la base d'un ensemble de règles de filtrage.

2. Dispositif de communication (100) selon la revendication 1, dans lequel l'ensemble de règles de filtrage est mémorisé dans le domaine de sécurité de mémoire (113a, 115a) du premier ensemble de domaines de sécurité (111a, 113a, 115a).

3. Dispositif de communication (100) selon la revendication 1 ou 2, dans lequel les données à transmettre par la radio (117) et les données reçues par la radio (117) comprennent une pluralité de paquets de données, dans lequel chaque paquet de données comprend un en-tête de paquet de données et une charge utile de paquet de données et dans lequel le domaine de sécurité de processeur (111a) du premier ensemble de domaines de sécurité (111a, 113a, 115a) est configuré pour surveiller et contrôler les en-têtes de paquet de données et les charges utiles de paquet de données des paquets de données à transmettre ou à recevoir par la radio (117) sur la base de l'ensemble de règles de filtrage.

4. Dispositif de communication (100) selon une quelconque des revendications précédentes, dans lequel le domaine de sécurité du processeur (111a) du premier ensemble de domaines de sécurité (111a, 113a, 115a) est configuré pour déterminer un identifiant d'adresse cible, notamment une adresse IP cible, associée à des données à transmettre par la radio (117) et un identifiant d'adresse source, notamment une adresse IP source, associé à des données reçues par la radio (117).

5. Dispositif de communication (100) selon la revendication 4, dans lequel l'ensemble de règles de filtrage comprend une liste noire d'identifiants d'adresses cibles, notamment d'adresses cibles IP, et dans lequel le domaine de sécurité du processeur (111a) du premier ensemble de domaines de sécurité (111a, 113a, 115a) est configuré pour interdire la transmission de données par la radio (117), dans le cas où l'identifiant d'adresse cible, notamment l'adresse IP cible, associé aux données à transmettre par la radio (117) fait partie de la liste noire des identifiants d'adresses cibles.

6. Dispositif de communication (100) selon la revendication 4 ou 5, dans lequel l'ensemble de règles de filtrage comprend une liste blanche d'identifiants d'adresses cibles, notamment d'adresses cibles IP, et dans lequel le domaine de sécurité du processeur (111a) du premier ensemble de valeurs de sécurité domaines (111a, 113a, 115a) est configuré pour interdire la transmission de données par la radio (117), dans le cas où l'identifiant d'adresse cible, notamment l'adresse IP cible, associé aux données à transmettre par la radio (117) ne fait pas partie de la liste blanche des identifiants d'adresses cibles.

7. Dispositif de communication (100) selon une quelconque des revendications 4 à 6, dans lequel l'identifiant d'adresse cible comprend un numéro de port.

8. Dispositif de communication (100) selon une quelconque des revendications 4 à 7, dans lequel l'ensemble de règles de filtrage comprend une liste noire d'identifiants d'adresses sources, notamment d'adresses sources IP, et dans lequel le domaine de sécurité du processeur (111a) du premier ensemble de domaines de sécurité (111a, 113a, 115a) est configuré pour interdire le traitement ultérieur des données reçues par la radio (117), dans le cas où l'identifiant d'adresse source, en particulier l'adresse source IP, associé aux données reçue par la radio (117) fait partie de la liste noire des identifiants d'adresses sources.

9. Dispositif de communication (100) selon une quelconque des revendications 4 à 8, dans lequel l'ensemble de règles de filtrage comprend une liste blanche d'identifiants d'adresses sources, notamment d'adresses sources IP, et dans lequel le domaine de sécurité du processeur (111a) du premier ensemble de domaines de sécurité (111a, 113a, 115a) est configuré pour interdire le traitement ultérieur des données reçues par la radio (117), dans le cas où l'identifiant de l'adresse source, en particulier l'adresse source IP, associé aux données reçues par la radio (117) ne fait pas partie de la liste blanche des identifiants d'adresse source.

10. Dispositif de communication (100) selon une quelconque des revendications 4 à 9, dans lequel l'identifiant d'adresse source comprend un numéro de port.

11. Dispositif de communication (100) selon une quelconque des revendications précédentes, dans lequel le domaine de sécurité du processeur (111a) du premier ensemble de domaines de sécurité (111a, 113a, 115a) est configuré pour déterminer un protocole de communication utilisé pour les données à transmettre par la radio (117) et/ou des données reçues par la radio (117) et dans lequel l'ensemble de règles de filtrage comprend une liste noire et/ou une liste blanche de protocoles de communication.

12. Dispositif de communication (110) selon une quelconque des revendications précédentes, dans lequel le domaine de sécurité du processeur (111a) du premier ensemble de domaines de sécurité (111a, 113a, 115a) est configuré pour ajuster l'ensemble de règles de filtrage en réponse à une demande d'ajustement d'une entité de réseau distante (151) du réseau de communication LPWA (100).

13. Dispositif de communication (110) selon la revendication 12, dans lequel le domaine de sécurité du processeur (111a) du premier ensemble de domaines de sécurité (111a, 113a, 115a) est configuré pour vérifier une signature numérique associée à la demande d'ajustement et d'ajuster l'ensemble des règles de filtrage en fonction de la demande d'ajustement, dans le cas où la signature numérique a été vérifiée.

14. Procédé d'exploitation d'un dispositif de communication (110) pour communiquer des données sur un réseau de communication (100) à zone étendue de faible puissance, LPWA, le dispositif de communication (110) comprenant un processeur (111) configuré pour traiter des données, une mémoire (113, 115) configuré pour stocker des données, et une radio (117) configurée pour transmettre et recevoir des données sur le réseau de communication LPWA (100), dans lequel le procédé (300) est **caractérisé par** :
faire fonctionner plus d'un ensemble logiquement séparés de domaines de sécurité (111a-c, 113a-c, 115a-c) comprenant un premier ensemble de domaines de sécurité (111a, 113a, 115a), sur le processeur (111) et le mémoire (113, 115), dans lequel chaque ensemble de domaines de sécurité comprend un domaine de sécurité de processeur (llla-c) et un domaine de sécurité de mémoire (113a-c, 115a-c), dans lequel le domaine de sécurité de processeur (111a) du premier ensemble de domaines de sécurité (111a, 113a, 115a) est configuré pour surveiller et contrôler les données à transmettre par la radio (117) et les données reçues par la radio (117) sur la base d'un ensemble de règles de filtrage.

15. Produit de programme informatique comprenant un code de programme pour exécuter le procédé (300) de la revendication 14, lorsqu'il est exécuté sur un ordinateur ou un processeur.
